# EUROPEAN PATENT APPLICATION

(11) **EP 0 909 714 A1**
(43) Date of publication of application: **21.04.1999**
(21) Application number: 98500226.0
(22) Date of filing: 15.10.1998
(51) Int. Cl.: B65D 6/18

(54) **Control system of reusable, erectable boxes**

(30) Priority: 17.10.1997 ES 9702158
(71) Applicant: Box Control S.L., 28003 Madrid (ES)
(72) Inventor: Toran Junquera, Lope, 28010 Madrid (ES)
(74) Representative: Gonzalez Palmero, Fé

(57) **Abstract**

Intended for boxes, preferably of plastic, whose lateral walls (3) are joined through articulations on the rims (2) of the bottom (1); the system consists in using staples (4), or other accesory elements alien to the box itself, as means to erect the boxes, which have to be unavoidably destroyed when folding it and which carry on them an individualized identification code which allows in every moment to control that the conditions of the rent contract are observed, both in what concerns the user of the boxes and the number of uses of the box.

## Description

### TECHNICAL FIELD

The present invention refers to a control system specially designed to follow the use of erectable boxes, for use in a rent modality and therefore, reusable.

The system can be used in the field of fruit and vegetables distribution, but obviously can also be applied in any other field with similar requirements.

The system permits to establish a usage control on the box, both in relation to the number of times it has been used and in what refers to the person or entity with rights to use it in accordance with a previously suscribed contract.

### BACKGROUND

In the preferential field of practical application of this invention, that of the fruit and vegetables, packaging is done using two alternative solutions, either in one use boxes, which generally are made from board or low quality and therefore low cost wood, dispensed with after their only use, or in reusable boxes, generally made of plastic, obviously with a considerably higher cost, which are written off through their reusable character function.

Because of the savings in transport, erectable plastic boxes are used with more frequency; they are generally collapsible, with lateral walls joined through articulations to the corresponding sides of the bottom, so that this type of boxes may be extended or folded when out of use to minimize considerably the volume they occupy in such situation, in order to minimize the transport costs when returned empty.

This type of boxes are generally equiped with dovetailed pressure joints, which permit an easy assembling and folding of them.

In order to increase the profitability in the use of these, a tendency every day more generalized to exploit them on a rent basis exists, so that a manufacturer or supplier rents out in a certain moment to the user a certain number of boxes, for a preestablished time and under certain conditions, that result in lower costs for the user than if he buys the boxes, because the continuous use of them allows to establish low renting fees.

This type of contracts are made based on the exclusive use of a certain number of boxes by a certain consumer, without the possibility of having these transfered to a third party, and with economic conditions which are are a function of the number of times the boxes are used during the contracted period of time.

Evidently, these conditions are at present practically uncontrollable and therefore their observance is based almost exclusively upon the good faith of the contractors.

The system that the invention proposes solves in a totally satisfactory manner the problems previously described, permiting an adequate control and tracking of the use of the boxes.

To do it and in a more concrete form, the system is based on the substitution of the classical means to assemble the box, with simple dovetailed pressure joints, by accesory accesory elements foreign to the box, like staples, brackets or pins, etc,... which have to be unavoidably inutilized to be able to fold the box, with the particularity that such elements are individually identified, incorporating each of them exclusive information regarding the assembler-reuser with whom at that moment the use of the box has been agreed, the moment circunstances and any other type of data which is considered convenient.

Besides, the said assembler-reuser of the box will be supplied with a machine adequate to assemble them, i.e. to apply the staples, brackets, pins or whatever elements involved; at the same time the final destinatary of the box, who has to fold it after emptying it to return it to its origin, will be also supplied with a tool to allow him to break or inutilize such elements, so as to allow the folding of the box.

In this manner, the elements to assemble the boxes will be supplied by the manufacturer or distributor of these, and considering that these elements are inutilized when the box is folded, a new set of them will be necessary every time they are assembled, which establishes the foreseen control on usage, at the same time that a personal inspection later in the field where the boxes move, will allow to directly ascertain if they are being used according to the contractual conditions, since they carry the coded closing elements, or if they are being used in an anomalous form, by using staples, brackets, pins or other elements without the proper code or with a code not corresponding to the condicions of use.

To complete the description under way and to assist in a better comprehension of the characteristics of the invention, a set of drawings is included as intregral part of this description, based on the preferential example of its practical realization, where with illustrative and not limitative character the following is shown:

Figure 1.- It shows a partial detail in perspective of one of the corners of an erectable and reusable box supplied with the control system object of this invention.

Figure 2.- It shows a similar detail as the previous figure corresponding to a variation of realization in which a pin is used as accesory assembling element of the box, instead of a staple.

Figure 3.- It shows another detail similar to the ones in the previous figures corresponding to another realization in which the assembling element is a bracket.

Figure 4.- It shows a detail in perspective of the accesory assembling element used in the box of figure 1.-, at a greater scale.

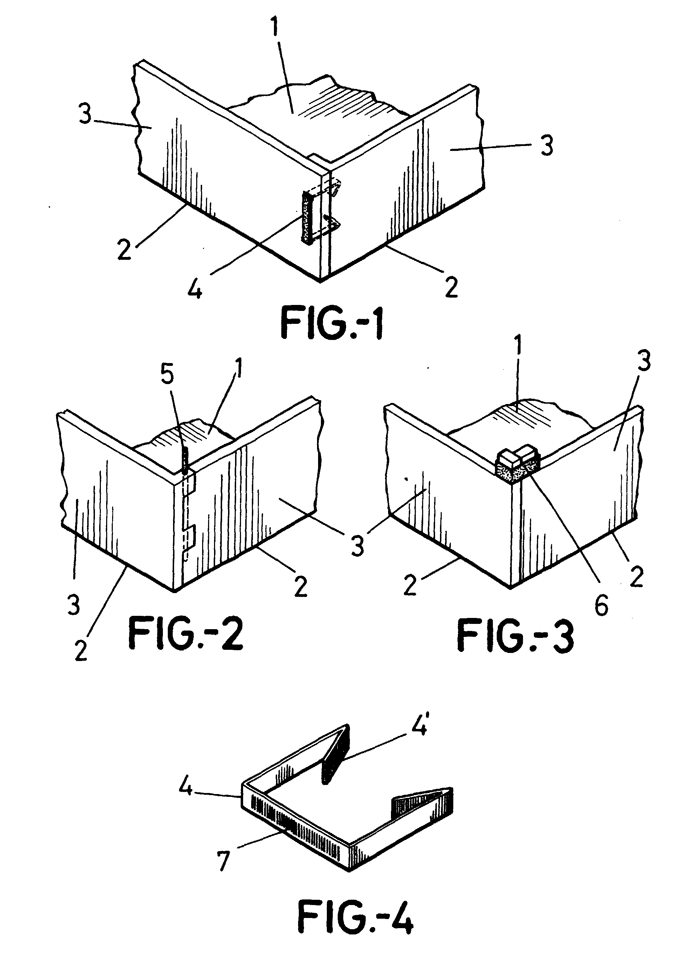

On seing this figures it can be observed how the proposed control system can be used with erectable reusable boxes, with preference plastic made, made up of a bottom (1), to whose sides (2) the lateral walls (3) are joined through articulations, being susceptible to adopt a coplanary or superimposed position with the bottom (1), when the box is not used, or to be assembled as the figures 1 to 3 show, when in use.

So, according to the control system that the invention proposes, the assembly of the box is done by fastening the lateral walls (3-3') together with the aid of accesory elements foreign to the box itself, such as the staples (4) of figure 1., the pins (5) of figure 2. or the brackets (6) of figure 3..

Whatever the case, this assembly elements (4 - 5 -6 ) have to present structural characteristics which imposibilitate the folding without destroying them. In this line and as example in the case of pins (5) being used, these should incorporate riveted heads on being assembled which have later to be cut to allow the folding. In the case of staples (4) their lateral legs could have, for example, breakable bent back folds (4'), which after being pushed through the holes in the lateral walls (3) of the box, are blocked in a position which cannot be altered without breaking the legs (4'), so that the staples (4) are rendered useless for their reuse.

In the case of brackets (6) being used, these can be placed in slits from where extraction results impossible without being previously broken.

In any case the auxiliary assembling elements (4 -5- 6) shall be provided with an individualized code (7) as the one schematically represented in figure 4., which may consist in a bar code or in any other means of identification in which the conditions of use of the box, regarding assembler/reuser, utilization date, etc... are conveniently established.

In this way, the use of the box according to the conditions of the rent contract brings with it the use of new fastening elements (4 - 5- 6) in each erecting operation, properly codified, which are inutilized when folding the box and consecuently have to be substituted by new ones in the next assembly, while the use of fastening elements (4 -5- 6) which lack this code mean that the contractual conditions have been breached and that the box is being used fraudulently.

Although the present description has been made using the three examples of practical realization for the accesory fastening elements, the staplkes (4), the pins (5) and the brackets (6), it is evident that these elements may be substituted by any others which are considered convenient in each case, without any other conditioning but to force their inutilization and that of its individualized code to fold the box.

It is not considered necessary to make this description any longer for any expert in the field to appreciate the trascendency of the invention and the advantages derived from it.

The materials, shape, size and disposition of the elements shall be susceptible of variation as long as it does not alter the essentials of the invention.

The terms in which this memorandum has been drafted shall always be taken in an ample and not limited sense.

## Claims

1. Control system for erectable, reusable boxes for rent, like, for example, the plastic boxes used in the distribution of fruits and vegetables, whose lateral walls are joined through articulations to their bottom and which are susceptible to be fastened one to the other when the box is assembled; distinguished because it incorporates accesory elements (4 - 5 - 6) as assembling means, foreign to the box itself, which require their destruction, or functional inutilization, for the box to be folded and consecuently have to be substituted by new ones every time that the box is assembled, with the special peculiarity that such elements (4 - 5 - 6) are provided with a code (7) to individualize the box, which allows at any time to verify if the conditions of use of the box comply with the existing contractual conditions.

2. Control system for erectable, reusable boxes for rent, as in 1st. claim, distinguished because staples (4), pins (5) or brackets (6) are used as individualized fastening elements, that conveniently fasten the lateral walls (3) of the box, whose folding requires their destruction.
